# EUROPEAN PATENT APPLICATION

(11) **EP 4 814 702 A1**
(43) Date of publication of application: **30.09.2026**
(21) Application number: 25275024.5
(22) Date of filing: 26.03.2025
(51) Int. Cl.: G06F 8/658, G06F 16/27

(54) **DATA TRANSFER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Data transfer arrangements are described between a synchronisation system and one or more external systems. Based on data stored in a metadata store (e.g. at a synchronisation system), a determination made regarding whether any software data stored in a software store corresponding to data sessions identified with respective synchronisation instances have not been transferred to one of one or more external systems. If so, a payload is generated including software data corresponding to un-transferred data session(s) for transfer to the respective external system(s).

## Description

### FIELD

The present invention relates to data transfer and/or data synchronisation, for example to data transfer and/or data synchronisation across domains.

### BACKGROUND

Data transfer/synchronisation across domains, for example for transfer of data between systems having different security classifications, can be implemented using manual or other processes. There remains a need for efficient and reliable data transfer arrangements.

### SUMMARY

According to a first aspect, there is provided a synchronisation system comprising: a control module; a metadata store configured to store information relating to updates provided to one or more external systems (i.e. there may be a one-to-many relationship), wherein said updates are associated with respective synchronisation identifiers; a software store configured to store software data obtained during one or more data sessions, wherein each data session records details of new data, changed data and/or deleted data since a preceding synchronisation instance; and an output module. The control module may be configured to: determine, based on data stored in the metadata store, whether any software data stored in said software store corresponding to data sessions identified with respective synchronisation instances have not been transferred to one of one or more external systems. The control module may be further configured to generate a payload including software data corresponding to un-transferred data session(s) for transfer to the respective external system(s). The output module may be configured to transfer the generated payload to the respective external system(s).

In some example embodiments, the output module is configured to provide the payload with an associated synchronisation identifier.

The system may further comprise a data transfer system for transferring data from the output module to the respective external system(s). The data transfer system may, for example, be a data diode or some other one-way data transfer system. The data transfer system may be a hard disk drive or system.

In some embodiments, each synchronisation identifier comprises a serial number, such as a chronological serial number.

The payload may, for example, identify a data session that the payload updates from and/or a data session that the payload relates to.

In some example embodiments, the control module is further configured to receive a synchronisation identifier identifying updates provided to the respective external system that has been successfully implemented at said external system. The synchronisation identifier may, for example, be received from a human operator (e.g. to provide feedback across the one-way data transfer mechanism).

In some embodiments, the control module is further configured to generate a payload update including software data corresponding to data sessions since the identified successfully implemented update for transfer to said respective external system. The output module may, for example, be configured to transfer the generated payload update to the respective external system.

According to a second aspect, there is provided an external system (e.g. an air-gapped or secure system) comprising: an input module for receiving payload data from a synchronisation system (e.g. via a data diode or some other one-way transfer system), wherein the payload data includes software data corresponding to un-transferred data session(s) for transfer from the synchronisation system to the external system; and a control module configured to combine software data received as part of the payload data with existing software data to generate a copy of the corresponding software stored at the synchronisation system. The input module and/or the control module may form part of a receiver module.

In some example embodiments, the payload identifies a data session that the payload updates from and/or a data session that the payload relates to.

The control module of the external system may be further configured to detect errors in the transfer of generated payloads from the synchronisation system to the external system. The control module may be further configured to provide, in the event of a detected error, to provide a synchronisation identifier identifying updates that have been successfully implemented at said external system. The input module may be further configured to receive a payload update including software data corresponding to data sessions since the identified successfully implemented update.

According to a third aspect, there is provided a method comprising: determining, based on data stored in a metadata store, whether any software data stored in a software store corresponding to data sessions identified with respective synchronisation instances have not been transferred to one of one or more external systems; and generating a payload including software data corresponding to un-transferred data session(s) for transfer to the respective external system(s). The method of the third aspect may, for example, be implemented by the synchronisation system of the first aspect.

The method may further comprise transferring the payload to the respective external system(s), for example via a one-way data transfer system (such as a data diode).

The payload may have an associated synchronisation identifier (e.g. a serial number such as a chronological synchronisation identifier).

The payload may identify a data session that the payload updates from and/or a data session that the payload relates to.

The method may further comprise receiving (e.g. from a human operator) a synchronisation identifier identifying updates provided to the respective external system that has been successfully implemented at said external system and generating a payload update including software data corresponding to data sessions since the identified successfully implemented update for transfer to said respective external system.

According to a fourth aspect, there is provided a method comprising: receiving payload data from a synchronisation system, wherein the payload data includes software data corresponding to un-transferred data session(s) for transfer from the synchronisation system; and combining software data received as part of the payload data with existing software data to generate a copy of the corresponding software stored at the synchronisation system. The method of the fourth aspect may, for example, be implemented by the external system of the second aspect. In some example embodiments, the payload data identifies a data session that the payload updates from and/or a data session that the payload relates to.

The method may further comprise detecting errors in the transfer of generated payloads from the synchronisation system. The method may further comprise, in the event of a detected error, providing a synchronisation identifier identifying updates that have been successfully implemented. The method may further comprise receiving a payload update including software data corresponding to data sessions since the identified successfully implemented update.

According to a fifth aspect, there is provided a system comprising: a synchronisation system as described herein (including as set out above with respect to the first aspect); one or more external systems as described herein (including as set out above with respect to the second aspect); and a data transfer mechanism for transferring payload(s) generated at the synchronisation system to respective external system(s). The external system(s) may include one or more secure or air-gapped systems. The data transfer mechanism may comprise a data diode arrangement or some other one-way data transfer system. The data transfer mechanism may comprise a hard disk device.

According to a sixth aspect, there is provided an apparatus comprising: at least one processor; and at least one memory including computer program code which, when executed by the at least one processor, causes the apparatus to perform at least: determining, based on data stored in a metadata store, whether any software data stored in a software store corresponding to data sessions identified with respective synchronisation instances have not been transferred to one of one or more external systems; generating a payload including software data corresponding to un-transferred data session(s) for transfer to the respective external system(s); and transferring the payload to the respective external system(s). The processor may further cause the apparatus to perform any method as set out above with respect to the third aspect.

According to a seventh aspect, there is provided an apparatus comprising: at least one processor; and at least one memory including computer program code which, when executed by the at least one processor, causes the apparatus to perform at least: receiving payload data from a synchronisation system, wherein the payload data includes software data corresponding to un-transferred data session(s) for transfer from the synchronisation system; and combining software data received as part of the payload data with existing software data to generate a copy of the corresponding software stored at the synchronisation system. The processor may further cause the apparatus to perform any method as set out above with respect to the fourth aspect.

According to an eighth aspect, there is provided computer-readable instructions which, when executed by a computing apparatus, cause the computing apparatus to perform (at least) any method as described herein (including the methods of the third or fourth aspects described above).

According to a ninth aspect, there is provided a computer-readable medium (such as a non-transitory computer-readable medium) comprising program instructions stored thereon for performing (at least) any method as described herein (including the methods of the third or fourth aspects described above).

According to a tenth aspect, there is provided an apparatus comprising: at least one processor; and at least one memory including computer program code which, when executed by the at least one processor, causes the apparatus to perform (at least) any method as described herein (including the methods of the third or fourth aspects described above).

### BRIEF DESCRIPTION OF THE FIGURES

Embodiments of the invention will now be described by way of example only with reference to the figures, in which:
Figure 1 is a block diagram of a system in which the principles described herein may be used;
Figure 2 is a flow chart that may be implemented using the system of Figure 1;
Figure 3 is a block diagram of a system in accordance with an example embodiment;
Figure 4 is a flow chart in accordance with an example embodiment;
Figures 5 to 7 are block diagrams of systems in accordance with example embodiments;
Figure 8 is a flow chart in accordance with an example embodiment;
Figures 9 and 10 are block diagrams of systems in accordance with example embodiments;
Figures 11 and 12 are flow charts in accordance with example embodiments;
Figure 13 is a block diagram of a system in accordance with an example embodiment;
Figures 14 and 15 are flow charts in accordance with example embodiments; and
Figure 16 is a block diagram of a system in accordance with an example embodiment.

### DETAILED DESCRIPTION

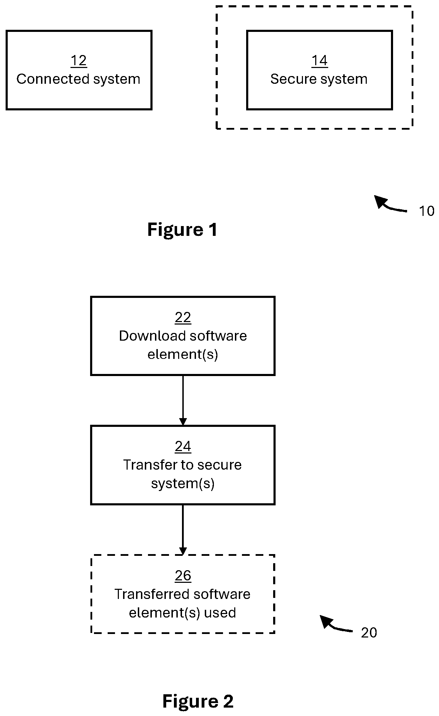

Figure 1 is a block diagram of a system, indicated generally by the reference numeral 10, in which the principles described herein may be used.

The system 10 comprises a connected system 12 and a secure system 14. The secure system 14 may have limited connection to the outside world. The secure system 14 may be a so-called "air-gapped" system, as discussed further below (although the principles described herein are not limited at air-gapped systems).

Secure and classified environments sometimes utilise air-gapped networks (such as the secure system 14) in order to ensure control over data ingress into and data egress out of the secure environment. As the name implies, an air-gapped network typically has extremely limited connectivity to other systems and is frequently, by design, not connected to the internet.

When working on air-gapped networks, there may be a need to have access to software dependencies and other supporting software. Such artefacts include, but are not limited to, operating system packages, software libraries, development tools, virtual machine images, and other computer code involved in software development. Making these artefacts available to the users of an air-gapped system in a timely, robust and repeatable manner can increase the efficiency of a software development team. There may further be a need to ensure that the software applications and operating system updates involved in the operation of the air-gapped system itself are available in a timely and reliable manner in order to facilitate general maintenance of the system and prompt 'patching' of security vulnerabilities.

Figure 2 is a flow chart, indicated generally by the reference numeral 20, that may be implemented using the system of Figure 1.

The flow chart 20 begins at step 22 with software element(s) being downloaded, for example by the connected system 12. The downloaded software elements may be for updating the secure system 14, or some similar system, or to be made available to users of the system 14 or some similar system.

At step 24, one or more downloaded software elements are transferred to one or more secure or air-gapped systems, such as the secure system 14. By way of example, some or all of the software elements downloaded in the step 22 may be transferred via some form of manual or automated transfer mechanism.

At step 26, some or all of the transferred software elements may be used in some way. For example, transferred software elements be made available to, or published to, users of the secure system(s). For example, software tooling at the secure system(s), such as file servers or web servers, may be used to publish the software elements for use by users of the respective secure system.

Software elements (e.g. source artefacts) for download in step 22 may be obtained from a variety of sources and may also vary greatly in format and/or size. Some sources may be well structured, such that determining newly created or modified files of interest (that may need to be provided to a secure system) is relatively straightforward. Other sources may have no structure, or may use a complex, proprietary and/or undocumented structure, so that it can be extremely difficult to determine artefacts to download and transfer to the secure system(s).

The nature of software elements or artefacts to be made available on the secure system may vary to a considerable extent. A collection of software elements for transfer can be prohibitively large (both in terms of number of files and the overall digital size of the data itself). As an example, at the time of writing, the Ubuntu Linux software repository is approximately 1.3 million files, totalling around 3 TB in size. The Python 'PyPI' repository is similarly large (>10TB). These are by no means isolated examples, and the full set of software repositories that may be required by a software development team working in an air-gapped environment can easily total many millions of files, and tens of terabytes of data.

The transfer of these software elements or artefacts may be further complicated since the source data may change regularly, for example as new artefacts are published (e.g. by commercial or public-domain software vendors) and/or as obsolete/deprecated/superseded artefacts are removed. This transfer step may take significant time, particularly if a malware (or similar) scanning step is involved in the process. It may be infeasible to transfer a complete collection of source artefacts onto a secure system each time an update is required, and in some cases the time required to transfer the artefacts may take longer than the latent period between updates being available/required. As an example, if it takes 24 hours to copy files between two systems (in an example implementation of the step 24), but the source data changes every 6 hours, the copied data will be obsolete by the time it is made available to the users of the secure system (in an example implementation of the step 26).

In an example implementation of the flow chart 20, the step 22 may make use of software that determines (e.g. by means of comparing before/after modification time, CRC or cryptographic hash) files that have changed since a given baseline and copying only those files that have changed. Examples of such software being Microsoft Robocopy and rsync. The identified files may then be copied to a second, 'portable' hard disk drive. This portable hard disk drive can then be temporarily connected to the secure system. Similar tooling, such as rsync, can then be used to pull any new/changed files onto the secure system, thereby implementing step 24.

Whilst it is possible to ensure that only new or changed files are transferred to the secure system in step 24, the arrangement described above has a number of limitations. For example, the use of a portable hard disk drive may result in three copies of the relevant data being required, with the relevant data being copied multiple times (e.g. from a source to a connected system 12, from the connected system to the hard disk drive and from the hard disk drive to the respective secure system). Transferring data in this way may be impractical in terms of data storage volume and/or the time required to transfer the data. The effort and overhead in operating such a system can be significant.

In a second potential example implementation of the flow chart 20, the step 22 may similarly utilise software such as rsync or Robocopy, with the files being written to a central filestore/fileshare. The step 24 may be implemented using standard software tooling, such as a 'folder watcher', which monitors the contents of this central filestore/fileshare and observes files being created, modified and deleted. These create/modify/delete instructions and any associated payload can then be transferred across a one-way data transfer system (such as a data-diode, as discussed below) in order to recreate an identical copy of the filesystem structure on a second system and made available to the users of the system 14 (for use in an example step 26).

Whilst this second implementation requires only two copies of the data, the use of a data-diode or the like means that it is difficult to resume failed transfers, other than re-sending all of the files currently present on the filestore/fileshare and ensuring that any deprecated/deleted files are then accordingly removed from the higher-classification system. This resynchronisation step can be significantly resource intensive, particularly when handling millions of files across a large number of directories.

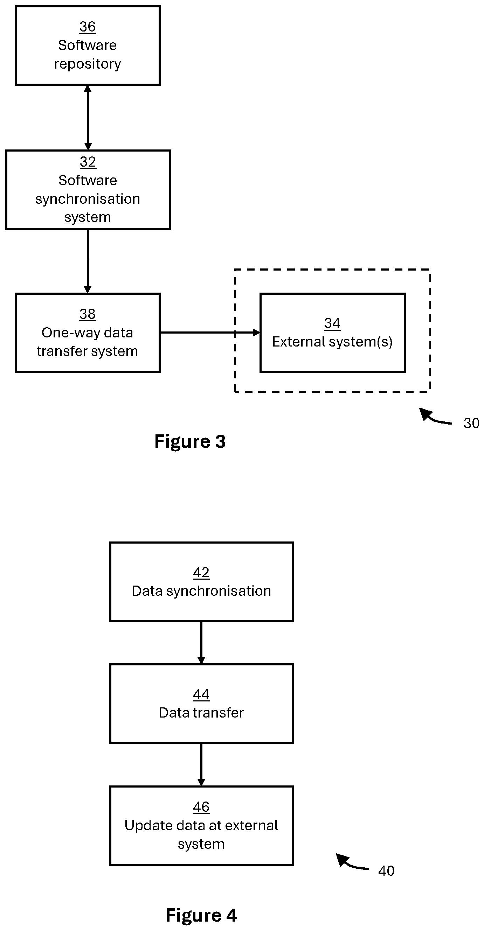

Figure 3 is a block diagram of a system, indicated generally by the reference numeral 30, in accordance with an example embodiment. The system 30 comprises a software synchronisation system 32, one or more external system(s) 34, one or more software repositories 36 and a one-way data transfer system 38.

The software synchronization system 32 may form part of an internet-connected (or otherwise network-enabled) system and may include at least some of the functionality of the connected system 12 described above. The external system(s) 34 may be one or more secure (e.g. air-gapped) system(s) and each may include at least some of the functionality of the secure system 14 described above.

The one-way data transfer system 38 links the software synchronisation system 32 to the external system(s) 34 and may take many forms, such as a data diode, a CD or DVD, a hard disk drive or device or some other proprietary data transfer system.

Figure 4 is a flow chart, indicated generally by the reference numeral 40, in accordance with an example embodiment. The flow chart 40 may be implemented using the system 30 described above.

The flow chart 40 starts at step 42, where data is synchronized at (or under the control of) the software synchronization system 32. At step 44, data is transferred from the software synchronization system 32 to the external system(s) 34. At step 46, some or all of the transferred data is updated at the external system(s).

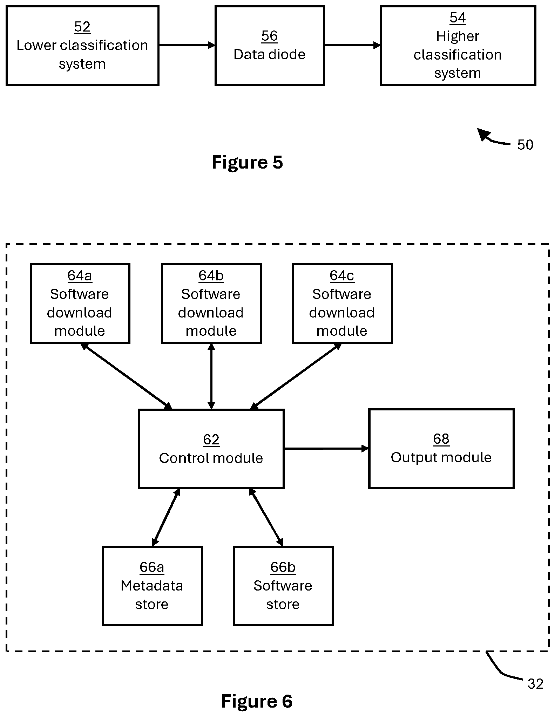

Figure 5 is a block diagram of a system, indicated generally by the reference numeral 50, in accordance with an example embodiment. The system 50 comprises a lower classification system 52, a higher classification system 54 and a data diode 56. The lower classification system 52 may, for example, have a lower security classification than the higher classification system 54. Although a single higher classification system 54 is shown in Figure 5, the system 50 may include multiple higher classification systems in a similar manner to the external system(s) 34 of Figure 3.

The higher classification system 54 may be a secure system (such as the secure system 14 or the external system(s) 34 described above) and may be kept separate from the lower classification system 52. The connected system 12 and the software synchronisation system 32 may be examples of lower classification systems. For example, the lower classification system may be a network-connected system and the higher classification system may be an air-gapped system.

The lower classification system 52 may implement the data synchronization step 42 of the flow chart 40 (and may include the software synchronization system 32 described above). The higher classification system 54 may implement the data update step 46 of the flow chart 40. The data transfer step 44 may be implemented using the data diode 56, or some other transfer system, such as the one-way transfer system 38 described above.

The data diode 56 enables data to be transferred from the lower classification system 52 to the higher classification system 54, but prevents data (or any other form of signalling) from being sent from the higher classification system 54 to the lower classification system 52. Data transfer from the low classification system 52 to the higher classification system 54 may be automated, such that data, in some example embodiments, can be sent at high speed without necessarily requiring human intervention. (It should be noted that the use of a data diode 56 is not essential - other one-way data transfer mechanisms, such as a hard disk drive or system as discussed elsewhere herein, may be used).

The use of the data diode 56 (or some other one-way data transfer mechanism) prevents the system 50 from having a return path from the higher classification system 54 to the lower classification system 52. As a result, it is not generally possible for the lower classification system 52 to determine which files (or which versions of files) already exist on the destination system (i.e. the higher classification system 54). Consequently, when using the system 50 to publish an update to the higher classification system 54, the lower classification system 52 may be required to:
- send all software/artefacts (i.e. new and existing artefacts) to the higher classification system 54 via the data diode 56 - this may be infeasible due to the volume of data transfer that would be required; or
- track which software/artefacts have already been sent across the data diode and only send the new or changed artefacts, and potentially a list of instructions to delete the artefacts that are deprecated and no longer required, this may be complicated by the fact that the artefacts may be large (in terms of volume and/or quantity). Alternatively, or in addition, the artefacts may change regularly, such that there may be several versions of a given artefact published on a given day that would need to be tracked.

Furthermore, in some example embodiments, transfers from the lower classification system 52 to the higher classification system 54 may be required to be "atomic", by virtue of any inter-relationships between the artefacts; for example, a file1.txt version 100 may depend on file2.txt version 100 and also file3.txt version 100. If an artefact is available on the receiving system, but one or more of its dependencies is not, then this may corrupt or interfere with software build processes. Ensuring that an artefact and its dependencies are simultaneously transferred, received or made available can pose a further challenge. Diagnosing and resolving this issue may require a significant amount of human effort. Some implementations might require re-transmitting all of the artefacts, in order to return the air-gapped datastore to a known good state.

There is the potential for the transfers in systems such as the systems 30 and 50 to be achieved by either (1) using existing commercial off-the-shelf (COTS) archive software (e.g. Winzip, tar etc.) to create a single archive file containing a given version of the artefacts; or (2) using other COTS software (for example 'Git') to create an overarching manifest that describes the component artefacts that make up a given version. These techniques also have associated disadvantages, again by virtue of the size and number of artefacts that need to be transferred between the systems. In particular, the processing or post-processing of a large number of artefacts (e.g. zipping, cataloguing etc.) can take significant time and processing power. The proprietary format of some required artefact stores may also make this more challenging.

Moreover, by virtue of the lack of return/error path, there may be no guarantee that a given artefact has been safely received by the destination system (e.g. in the event of a transient failure, accidental cable disconnection or data corruption). In this case, it may be necessary for a human to intervene and opt to either 1) send all artefacts again, or 2) perform some form of reconciliation in order to determine which of the artefacts should be re-sent. Sending all artefacts again has the disadvantages previously described (by virtue of the size and number of artefacts), whilst manual reconciliation of millions of files may be infeasible. Depending upon the size of the repository and the number of stored artefacts, recovering the air-gapped system from a transient failure or error may take significant amounts of time and effort.

Figure 6 is a block diagram of an example implementation of the software synchronisation system 32 of the system 30 described above, in accordance with an example embodiment. The system 32 shown in FIG. 6 comprises a control module 62, one or more software download modules 64a-64c, a metadata store 66a, a software store 66b (e.g. an artefact store), and an output module 68 (e.g. a transmitter). The software synchronization system 32 may be used as part of the lower classification system 52 described above.

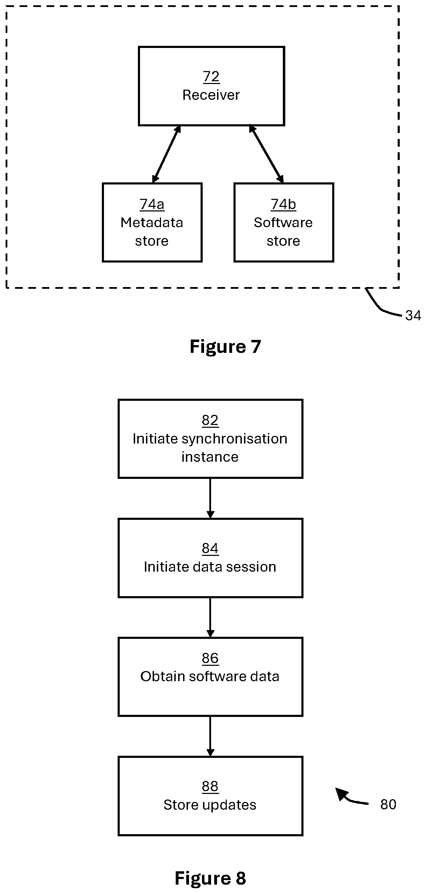

Figure 7 is a block diagram of an example implementation of the external system 34 of the system 30 described above, in accordance with an example embodiment. The system 34 shown in Figure 7 comprises a receiver 72, a metadata store 74a and a software store 74b (e.g. an artefact store). The external system 34 may be used as part of the higher classification system 54 described above.

Each of the one or more software download modules 64a, 64b, 64c may be configured to obtain software data from one or more respective external data sources; the external data sources may, for example, include one or more public data repositories. For example, each software download module may be configured to handle one or more specific types, structures, sources and/or formats of data. Thus, the software download modules 64 may collectively implement step 22 of the flow chart 20. Of course, three software download modules are shown by way of example only - any number of software download modules could be provided in any particular implementation.

As discussed in detail below, the control module 62 may be used to initiate one or more synchronisation instances and to define a synchronisation identifier (e.g. a serial number which, as discussed in detail below, may be a chronological serial number) for each synchronisation instance. The synchronisation identifiers may be stored by the metadata store 66a.

The software store 66b may be configured to initiate a data session (e.g. a copy-on-write session) identified with a respective synchronisation instance for storing software data obtained by said one or more software download modules 64. The data session may record details of new data, changed data and/or deleted data since a preceding synchronisation instance.

The output module 68 may be used to provide a payload and an associated synchronisation identifier to one or more external systems 34, wherein said payload is generated by the control module and/or the output module. The metadata store 66a may be used to store information relating to updates provided to one or more external systems 34, with the updates being associated with respective synchronization identifiers.

A data transfer system, such as the one-way data transfer system 38, data diode 56 or some similar one-way data transfer system, may be provided for transferring data from the output module 68 to the respective external system(s) 34. The data transfer system may be used to couple the output module 68 to the receiver 72 (or to different instances of the receiver 72).

Figure 8 is a flow chart, indicated generally by the reference numeral 80, in accordance with an example embodiment. The flow chart 80 may be implemented at the software synchronisation system 32 described above (e.g. by, or under the control of, the control module 62).

The flow chart 80 starts at step 82, where a synchronisation instance is initiated. The step 82 includes defining a synchronisation identifier for the synchronisation instance, and storing said synchronisation identifier in a metadata store (such as the metadata store 66a described above). The synchronisation identifier may be in the form of a serial number (e.g. a chronological serial number, as discussed in detail below).

At step 84, a data session is initiated. The data session is identified with the synchronisation instance for storing obtained software data.

At step 86, software data is obtained from one or more respective external data sources during said data session (e.g. from one or more software repositories 36). The step 86 may be implemented using one or more of software download modules 64a, 64b, 64c described above. The one or more external data sources may include one or more public domain repositories.

At step 88, the software data updates obtained in the step 86 are stored in a software store (such as the software store 66b described above). The stored software data updates may be associated with the synchronisation identifier referred to in the step 82 and may include details of new data, changed data and/or deleted data since a preceding synchronisation instance. The storing of updated data may mark the completion of a data synchronisation step (e.g. an instance of step 42 of the flow chart 40).

As discussed in detail below, a payload and an associated synchronisation identifier may be provided to one or more external systems 34. The metadata store 66a may be used to store information relating to updates provided to one or more of said external systems, wherein said updates are associated with respective synchronisation identifiers.

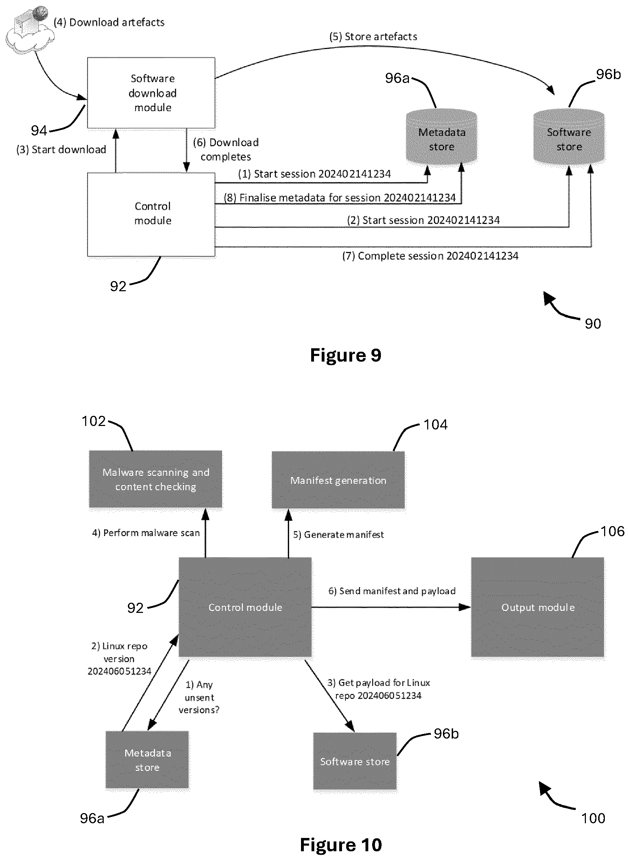

Figure 9 is a block diagram of a system, indicated generally by the reference numeral 90, in accordance with an example embodiment. The system 90 is an example implementation of the software synchronization system 32 described above and may be used to implement the algorithm 80 (and the data synchronisation step 42) described above.

The system 90 comprises a control module 92 (similar to the control module 62 described above), one or more software download modules 94 (similar to the software download modules 64a, 64b, 64c described above), a metadata store 96a (similar to the metadata store 66a described above), and a software store 96b (similar to the software store 66b described above).

In order to initiate a new synchronization process (see step 82 of the flow chart 80), the control module 92 generates a serial number for the synchronisation instance. This serial number is written to the metadata store 96a, together with the time and date when the synchronisation was started (see step 1 as labelled in the system 90).

A particular example embodiment uses serial numbers in the format [YYYY][MM][DD][HH][MM]; for example, "202406051213" (i.e. 12:13 on 5 June 2024). This format is both human readable as a chronological date, and straightforward for a human and/or computer to compare two dates in this numerical format - incrementing any part of the minute, hour or date results in a larger number. Of course, many alternative serial number arrangements (including other chronological serial numbers and other serial number arrangements in which the serial numbers can be readily compared by human and/or machine) could be used.

In step 2 as labelled in the system 90, the software store 96b begins a new session (e.g. a new copy-on-write session) for the synchronisation instance (the synchronisation instance being identified by the generated serial number).

In step 3, public domain repositories (or other repositories, such as software repositories 36) including data to be provided to external system(s) are downloaded (e.g. periodically downloaded) under the control of the control module 92.

This download process is handled by a number of specific software download modules 94, which may be designed to handle specific types and structures of data, including handling proprietary structures and formats. For example, there may be a software download module that handles the download of the artefacts, packages and dependencies relating to Ubuntu Linux. Similarly, an implementation may feature a software download module that handles the download of artefacts relating to CentOS Linux. These download modules may utilise existing COTS or public-domain tools (e.g. apt-mirror), or may be proprietary to the application/implementation.

A particular synchronization instance of a given version of source artefacts may be treated as a single atomic entity, with each synchronization instance being allocated a unique serial number. This enables the system to function and also provides a reference point for human operators and users of the system. These concepts are discussed further herein.

In step 5, the software download module 94 downloads the required artefacts from the related source and stores these artefacts in the software store 96b, tagged to the created copy-on-write session (see step 2). The software store 96b may record the details of any new/changed artefacts, together with those that been removed from the source repository since the previous synchronization took place, which should be accordingly removed from the repository of the external system(s).

Once the software download module has completed the synchronisation, the copy-on-write session is finalized (see step 7) and marked 'complete' in the metadata store 96a (step 8).

In the system 90, the control module 92 is responsible for managing the software download module(s) 94, together with performing periodic 'housekeeping' functions, such as removing metadata and artefacts relating to superseded or redundant sessions. The control module is also responsible for determining which artefact session(s) need to be transferred across the link to the external system.

In this way, the system 90 stores the details of which artefact sessions have been/remain to be transferred across a link to external system(s), hence avoiding one purpose of a return path from the (potentially higher classification) external system. Relevant data regarding the artefact sessions can be stored in the metadata store 96a.

The description above generally assumes one-to-one transfer between two computer systems. However, the principles described herein are also applicable to one-to-many transfer between multiple computer systems. In this case the metadata store 96a may hold details of the versions that have been sent to each of the receiving computers (e.g. each of a number of external systems), with the descriptions below accounting for this when discussing serial numbers.

Moreover, chaining of systems is also supported, such that a network connected system (or some other lower classification system) can retrieve the necessary artefacts or software modules, with a series of chained systems transferring the artefacts between themselves, potentially with a data diode or other transfer mechanism between each one.

Figure 10 is a block diagram of a system, indicated generally by the reference numeral 100, in accordance with an example embodiment. The system 100 may be used to transfer data collated by a software synchronisation system (such as the system 32) to one or more external systems (such as the external systems 34). Thus, the system 100 may be used to implement step 44 of the algorithm 40. The system 100 may be implemented by the system 32 described above.

The system 100 comprises the control module 92, the metadata store 96a and the software store 96b described above and further comprises a malware scanning and content checking module 102, a manifest generator 104 and an output module 106.

As discussed above, the metadata store 96a may store information relating to updates provided to one or more external systems, where said updates are associated with respective synchronisation identifiers (e.g. a serial number, such as the chronological serial number described above). Furthermore, the software store 96b stores software data obtained during one or more data sessions, wherein each data session records details of new data, changed data and/or deleted data since a preceding synchronisation instance.

The control module 92 determines, based on data stored in the metadata store 96a, whether any software data stored in the software store 96b corresponding to data sessions identified with respective synchronisation instances have not been transferred to one of one or more external systems. If so, the control module can be used to generate a payload including software data corresponding to un-transferred data session(s) for transfer to the respective external system(s). The payload may identify a data session that the payload updates from and/or a data session that the payload relates to.

The output module 106 can then be used to transfer the generated payload to the respective external system(s), for example with an associated synchronisation identifier. As discussed in detail above, a data transfer system (such as a data diode or some other one-way data transfer system) can be used for transferring data (including the payload) from the output module 106 to the respective external system(s).

The following algorithm may be implemented by the system 100.

The control module 92 consults the metadata store 96a (e.g. periodically) to determine whether any sessions have been generated that have not yet been transmitted to external systems (see step 1 of Figure 10). The metadata store may respond by indicating untransmitted session (see step 2 in Figure 10, which indicates, by way of example, that a Linux update has not been transmitted). The payload relating to the update indicated in step 2 may be obtained from the software store 96b (see step 3 in Figure 10).

Depending on the application, the control module 92 may also carry out malware scanning, content inspection and/or cryptographic signing of the payload using the malware scanning and content checking module 102 (see step 4 of Figure 10). Note that this step may be omitted, or performed in some other way.

If there are any untransmitted sessions, then the control module 92 generates a blob consisting of a manifest and the payload of the most recent copy-on-write payload for this session. The manifest may be generated by the manifest generation module 104 (see step 5 of Figure 10). The contents of the manifest may, for example, include one or more of:
- The name of the source collection that the respective payload relates to.
- The 'old' version number (i.e. the version that this payload updates from).
- The 'new' version number (i.e. the version that this payload relates to).
- The size of the payload itself.
- A cryptographic hash of the payload.

The skilled person will be aware of other manifest content that could be provided instead of, or in addition to, one or more of the elements outlined above.

In step 6, the manifest and payload are provided to the output module 106. The output module can then send the manifest and the payload across the link to a receiver of each of one or more external systems (e.g. via a one-way data transfer system, such as a data diode).

In some example embodiments, the payload is a delta of changes from the previous version of the source data. It is possible that a malware scan of the payload itself may not identify malware introduced across a change-boundary (e.g. partly in the previously transferred version and partly in the transferred delta). Particular implementations may carry out additional malware scanning and content inspection at other points of the process in order to work around this limitation.

Depending on when the most recent transfer was made by the output module 106, the transmitter side (e.g. a lower classification system 52) may be several versions 'ahead' of a receiver side (e.g. a higher classification system 54). In this event, the transmitted payload may be a combination of several versions combined, potentially each with a corresponding manifest. In any case, the transmitter side may determine and transmit the required data in order to bring the receiver side of the system into the same state as the transmitter side.

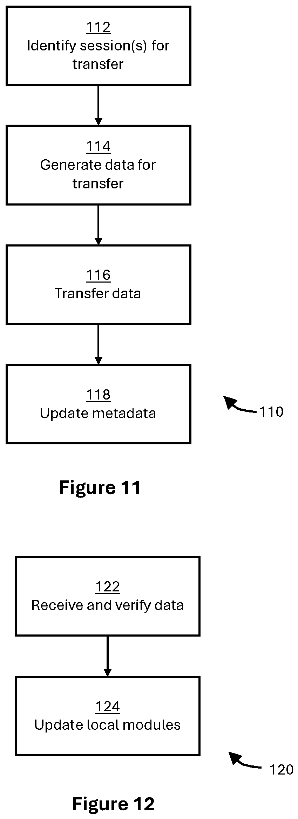

Figure 11 is a flow chart, indicated generally by the reference numeral 110, in accordance with an example embodiment. The flow chart 110 may be used to transfer data collated by a software synchronisation system (such as the system 32) to one or more external systems (such as the external system(s) 34). The flow chart 110 may be implemented by the system 100 described above.

At step 112, a determination is made (e.g. by the control module 92 or some other control module) of whether one or more sessions for transfer have been identified. The step 112 may be implemented by determining, based on data stored in a metadata store 96a, whether any software data stored in a software store (e.g. the software store 96b) corresponding to data sessions identified with respective synchronisation instances have not been transferred to one of one or more external systems.

If a session is identified in step 112, then the flow chart 110 moves to step 114 where data for transfer is generated. The step 114 may be implemented by generating a payload including software data corresponding to un-transferred data session(s) for transfer to the respective external system(s), as discussed above. The payload may identify a data session that the payload updates and/or a data session that the payload relates to. As discussed in detail above, the payload may have an associated synchronisation identifier.

At step 116 of the flow chart 110, data is transferred by transferring the payload to the respective external system(s). This may be implemented by sending data via a one-way data transfer system, such as a data diode. In one embodiment, a human operator may be able to generate a one-time "out of band" transfer, for example for manual transfer via a hard disk device.

At step 118, metadata (e.g. as stored in the metadata store 96a) may be updated (for example recording details of the data transfer implement in the step 116).

As discussed further below (in relation to error detection/correction), in some example embodiments, a synchronisation identifier may be received (e.g. from a human operator) identifying updates provided to the respective external system that have been successfully implemented at said external system, and a payload update may be generated including software data corresponding to data sessions created since the identified successfully implemented update for transfer to said respective external system.

Figure 12 is a flow chart, indicated generally by the reference numeral 120, in accordance with an example embodiment. The flow chart 120 may be implemented at an external system (such as one of the systems 34). For example, the flow chart 120 may be implemented in response to data sent in an implementation of the flow chart 110.

The flow chart 120 starts at step 122, where payload data is received from a synchronisation system. The payload data includes software data corresponding to un-transferred data session(s) for transfer from the synchronisation system. The payload data may be sent from a software synchronisation system in an implementation of step 116 of the flow chart 110. The received data may be verified in some way.

At step 124 of the flow chart 120, local modules are updated based on software data received in step 122 as part of the payload data. Thus, a copy of the corresponding software stored at the synchronisation system is generated.

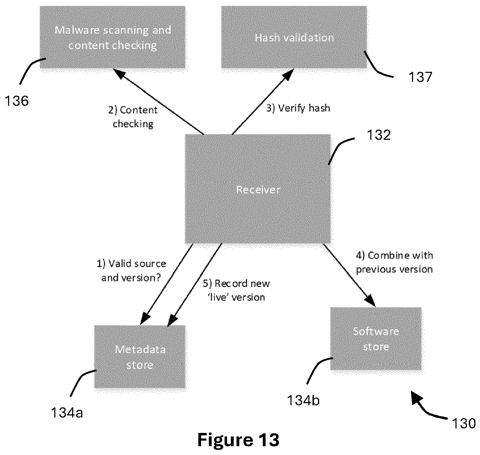

Figure 13 is a block diagram of a system, indicated generally by the reference numeral 130, in accordance with an example embodiment. The system 130 may be used to implement an external system (such as the external system(s) 34). Specifically, the system 130 may be used to receive data from a software synchronisation system (such as the systems 32 and 100 described above) and update local modules. Thus, the system 130 may be used to implement step 46 of the algorithm 40 and/or to implement the flow chart 120.

The system 130 comprises a receiver 132, a metadata store 134a, a software store 134b, a malware scanning and content checking module 136 and a hash validation module 137. The receiver 132 may include an input module for receiving signals and data from a synchronisation system (e.g. a connected system or a lower classification system) and/or a control module for controlling aspects of the system 130.

An input module (which as noted above may be provided as part of the receiver 132) receives payload data from a synchronisation system. As discussed above, the payload data may include software data corresponding to un-transferred data session(s) for transfer from the synchronisation system to the external system. The payload may identify a data session that the payload updates from and/or a data session that the payload relates to.

The receiver 132 communicates with the metadata store 134a (see step 1 in Figure 13) to perform functions such as verifying that the payload relates to a data collection that it hosts and/or verifying that the 'old' version of the data in the manifest is that of the most recent version it hosts.

In addition, the receiver may perform malware scanning using the malware scanning and content checking module (step 2 of Figure 2) and/or verify the cryptographic hash of the payload received (see step 3 of Figure 13). Note that one or more of steps 1 to 3 may be omitted, or performed in some other way.

If any of the checks outlined in steps 1 to 3 fails, then the receiver may mark the transfer as having failed. As discussed further below, this failure may be flagged to a human operator in some way.

A control module (which as noted above may be provided as part of the receiver 132) is provided to combine software data received as part of the payload data with existing software data to generate a copy of the corresponding software stored at the synchronisation system. For example, the receiver 132 may send the received payload to the software store 134b (see step 4 of Figure 13). The copy-on-write concept discussed above can then be used to combine the new payload with the existing data, in order to produce a byte-identical copy of that found on the transmitter side. The concept of copy-on-write also means that an immediate and atomic change can be made to the destination data, thereby overcoming one of the shortcomings of some prior art arrangements.

Users of the system 130 can then consume the artefacts stored by the software store 134b. Whilst this store is inherently an amalgamation of many transferred versions, the view presented to users may be that of a single contiguous store of data.

As discussed further below, the control module of the external system (such as the control module of the receiver 132) may be further configured to detect errors in the transfer of generated payloads from the synchronisation system to the external system. In the event of a detected error, the control module may provide a synchronisation identifier identifying updates that have been successfully implemented at said external system. The receiver 132 may, for example, subsequently receive a payload update including software data corresponding to data sessions since the identified successfully implemented update.

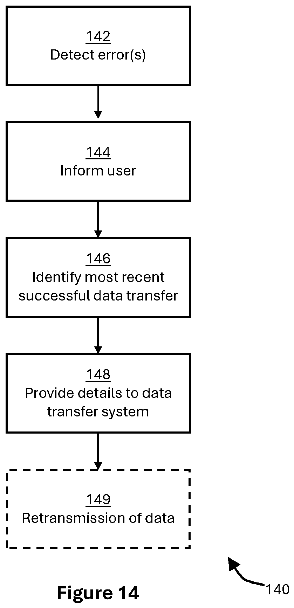

Figure 14 is a flow chart, indicated generally by the reference numeral 140, in accordance with an example embodiment. The flow chart 140 provides more information regarding the error detection and correction arrangements discussed briefly above.

The algorithm set out in the flow chart 140 may be triggered in the event of a failure (e.g. human error, computer error and/or power outages) resulting in a software synchronisation system 32 and an external system 34 (or similar modules) becoming out of sync. Due, at least in part, to the lack of a return path as discussed above, such failures can result in the synchronisation system sending data without being aware that the external system is not receiving the data. Solutions to this problem (once identified) include sending all artefacts again from the very first version or implementing some form of manual reconciliation of the artefacts on each side.

The flow chart 140 starts at step 142 where one or more errors in the transfer of generated payloads from the synchronisation system are detected at the receiver.

At step 144, a user (e.g. a human operator) may be informed that an error has occurred. The user may determine (and correct) the fault that led to the error.

At step 146, the most recent successfully transferred data is identified. For example, a synchronisation identifier identifying updates that have been successfully implemented may be determined by the user. As discussed above, the identifier may be a serial number, such as a chronological serial number (e.g. 202406051234).

At step 148, details of the successfully transferred data as identified in step 146 are provided to the software synchronisation system. This may be implemented, for example, by a human operator; for example, an operator may manually transcribe a version number into a management interface on the software synchronisation side of the system 100. This enables the metadata store of the software synchronisation system to be updated with software versions that have been successfully transferred to the receiver side 130.

At step 149, data may be re-transmitted. For example, a payload update including software data corresponding to data sessions since the identified successfully implemented update may be provided by the output module 106 of the software synchronisation system 100 to the receiver 130.

The flow chart 140 thereby enables normal operation of the system to be resumed and may avoid the need to re-send all data, or for complex reconciliation of the existing data.

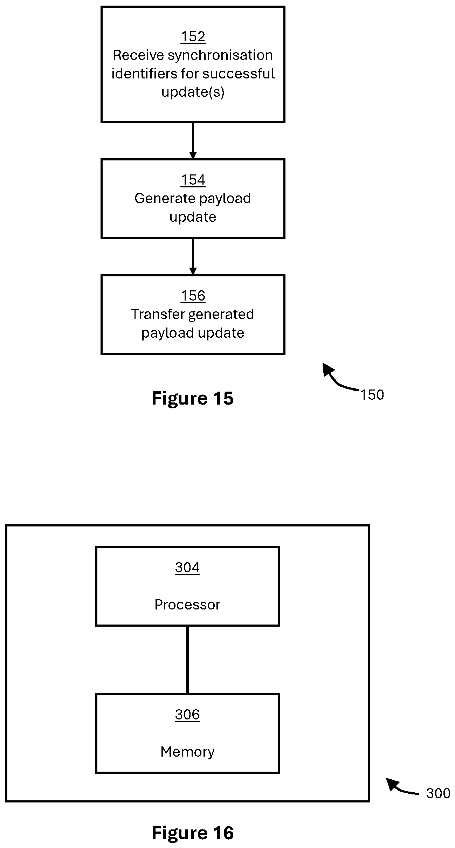

Figure 15 is a flow chart, indicated generally by the reference numeral 150, in accordance with an example embodiment.

The flow chart 150 starts at step 152, where details of the successfully transferred data as identified in step 146 of the flow chart 140 are provided to the software synchronisation system. As noted above, this may be implemented by a human operator. This enables the metadata store (e.g. metadata store 66a or 96a) of the software synchronisation system to be updated with software versions that have been successfully transferred to the receiver side (e.g. system 70 or 130).

At step 154, payload data is generated at the software synchronisation system (e.g. the system 32). The payload data includes software data corresponding to data sessions that were created since the identified successfully implemented update, and not yet transmitted to (or successfully received at) the receiver side 70, 130. For example, a control module of the software synchronisation system may consult the respective metadata store 66a, 96a and identify that there are data session(s) to be transmitted to the receiver side 130.

At step 156, transfers from the software synchronisation side to the external system(s) can be restarted from the correct point.

The embodiments described herein can be used to implement block-based transfer of large volumes of data between computer systems (e.g. between an internet-connected system and an air-gapped network). For example, data may be transferred from public domain software repositories onto an air-gapped network. Some implementations relate to synchronising data between two computers within the same physical vicinity, the principles described herein are applicable to the transfer of data between multiple computers across multiple local or remote geographies, including so-called cloud services.

Some example embodiments described herein seek to enable efficient transfer (e.g. automated transfer) of data artefacts across an 'air gap', without needing any form of permanent return path between the two computer systems. This is notable, because the two systems could be at different levels of security classification and such a return path may be prohibited for security reasons.

The 'block level' transfer described herein seeks to enable transfer of data artefacts between computer systems, to meet at least some of the following characteristics:
- reliable and fault-tolerant transfer of data artefacts;
- tracking of which artefacts have been sent across the link;
- omitting a return path between systems at different security classifications;
- readily handling data artefacts of varying sizes and structures;
- reducing or removing the need for storing intermediate copies of the data;
- enabling atomic transfer of all inter-related artefacts at a given version;
- enabling a human operator to re-synchronise the system in the event of failure.

Figure 16 is a block diagram of a system 300 (comprising a memory 306 and a processor 304) that can be used in implementations of example embodiments described herein. The processor 304 (e.g. a CPU) may store a computer program for implementing aspects of one or more of the algorithms described herein (such as the flow charts 20, 40, 80, 110, 120, 140 or 150 described above). In practice, the processor 304 may be (or may include) a digital signal processor (DSP) including processing blocks such as multipliers, adder/subtractors, and storage registers. The processing may be performed in parallel using pipelines and local registers to enable a high processing rate and data throughput.

Embodiments of the components described herein can be implemented using any suitable software, hardware or firmware applications, programming language, data editors, etc., and may be represented/stored/processed using any suitable data structures, and so on.

All of the features disclosed in the specification (including any accompanying claims, abstract and drawings), and/or all of the steps of any method or process so disclosed may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in the specification (including any accompanying claims, abstract and drawings), or to any novel one, or any novel combination, of the steps of any method, process or flow chart so disclosed.

## Claims

1. A synchronisation system comprising:
a control module;
a metadata store configured to store information relating to updates provided to one or more external systems, wherein said updates are associated with respective synchronisation identifiers;
a software store configured to store software data obtained during one or more data sessions, wherein each data session records details of new data, changed data and/or deleted data since a preceding synchronisation instance; and
an output module,
wherein:
the control module is configured to: determine, based on data stored in the metadata store, whether any software data stored in said software store corresponding to data sessions identified with respective synchronisation instances have not been transferred to one of one or more external systems;
the control module is further configured to generate a payload including software data corresponding to un-transferred data session(s) for transfer to the respective external system(s); and
the output module is configured to transfer the generated payload to the respective external system(s).

2. The system according to claim 1, wherein the output module is configured to provide the payload with an associated synchronisation identifier and/or each synchronisation identifier comprises a serial number.

3. The system according to claim 1 or claim 2, further comprising a data transfer system for transferring data from the output module to the respective external system(s).

4. The system according to any one of the preceding claims, wherein the payload identifies a data session that the payload updates from and/or a data session that the payload relates to.

5. The system according to any one of the preceding claims, wherein the control module is further configured to:
receive a synchronisation identifier identifying updates provided to the respective external system that has been successfully implemented at said external system; and
generate a payload update including software data corresponding to data sessions since the identified successfully implemented update for transfer to said respective external system,
wherein the output module is optionally configured to transfer the generated payload update to the respective external system.

6. An external system comprising:
an input module for receiving payload data from a synchronisation system, wherein the payload data includes software data corresponding to un-transferred data session(s) for transfer from the synchronisation system to the external system; and
a control module configured to combine software data received as part of the payload data with existing software data to generate a copy of the corresponding software stored at the synchronisation system.

7. The system according to claim 6, wherein the payload identifies a data session that the payload updates from and/or a data session that the payload relates to.

8. The system according to claim 6 or claim 7, wherein the control module of the external system is further configured to detect errors in the transfer of generated payloads from the synchronisation system to the external system.

9. The system according to claim 8, wherein the control module of the external system is further configured to provide, in the event of a detected error, a synchronisation identifier identifying updates that have been successfully implemented at said external system, wherein the input module is optionally further configured to receive a payload update including software data corresponding to data sessions since the identified successfully implemented update.

10. A method comprising:
determining, based on data stored in a metadata store, whether any software data stored in a software store corresponding to data sessions identified with respective synchronisation instances have not been transferred to one of one or more external systems; and
generating a payload including software data corresponding to un-transferred data session(s) for transfer to the respective external system(s).

11. The method according to claim 10, further comprising transferring the payload to the respective external system(s).

12. A method comprising:
receiving payload data from a synchronisation system, wherein the payload data includes software data corresponding to un-transferred data session(s) for transfer from the synchronisation system; and
combining software data received as part of the payload data with existing software data to generate a copy of the corresponding software stored at the synchronisation system.

13. The method according to claim 12, further comprising detecting errors in the transfer of generated payloads from the synchronisation system, wherein the method optionally further comprises providing, in the event of a detected error, a synchronisation identifier identifying updates that have been successfully implemented.

14. A system comprising:
a synchronisation system as claimed in any one of claims 1 to 5;
one or more external systems as claimed in any one of claims 6 to 9; and
a data transfer mechanism for transferring payload(s) generated at the synchronisation system to respective external system(s).

15. An apparatus comprising: at least one processor; and at least one memory including computer program code which, when executed by the at least one processor, causes the apparatus to perform at least:
determining, based on data stored in a metadata store, whether any software data stored in a software store corresponding to data sessions identified with respective synchronisation instances have not been transferred to one of one or more external systems;
generating a payload including software data corresponding to un-transferred data session(s) for transfer to the respective external system(s); and
transferring the payload to the respective external system(s).
